# EUROPÄISCHE PATENTSCHRIFT

(11) **EP 1 865 421 B1**
(45) Veröffentlichungstag und Bekanntmachung des Hinweises auf die Patenterteilung: **20.02.2019**
(21) Anmeldenummer: 06011931.0
(22) Anmeldetag: 09.06.2006
(51) Int. Cl.: G06F 17/30

(54) **System zur Erstellung dynamischer Webseiten**
System for the Generationan of Dynamic Web Pages
Systême pour la génération de pages web dynamiques

(43) Veröffentlichungstag der Anmeldung: 12.12.2007
(73) Patentinhaber: Siemens Aktiengesellschaft, 80333 München (DE)
(72) Erfinder: Herberth, Harald, 90522 Oberasbach (DE)

(56) Entgegenhaltungen:
- WO-A-01/67190
- US-A1- 2004 015 476

## Beschreibung

Die Erfindung betrifft ein System bzw. ein Verfahren zur automatisierten Erstellung dynamischer Webseiten.

Unter dynamischen Webseiten oder dynamisch gestalteten Webseiten versteht man, dass der eigentliche Inhalt einer Webseite erst durch den Besuch eines Internetsurfers generiert bzw. erstellt wird. Der Inhalt der Webseite kann dabei dynamisch, also im Moment der Anfrage durch einen Webbrowser erstellt werden und muss nicht bereits statisch (also in Form einer HTML-Seite) für Webserver verfügbar sein. Es ist dabei bereits bekannt, dass ein Webserver in einer speicherprogrammierbaren Steuerung (SPS) zur Anwendung gekommen ist. Bei solchen Webservern muss weiterhin programmiert bzw. projektiert werden, welche Informationen von Webseiten angeboten werden sollen. Die Programmierung eines Webservers erfolgt in einer Programmiersprache, die üblicherweise Java, C/C++, PHP (Personal Home Page tools), Perl und andere oder Kommunikationsmechanismen bei Web-Anwendungen sind. Solche Programmiersprachen sind aber für eine SPS-Anwendung nicht verfügbar. Da in den meisten Fällen die Personen, die die Inhalte und Funktionalität der Web-Anwendung spezifizieren, nicht gleichzeitig die notwendigen Technologiekenntnisse zur Implementierung von SPS besitzen, ist eine Zusammenarbeit mit weiteren Personen erforderlich. Dadurch kann die Qualität des Arbeitsergebnisses negativ beeinflusst werden. Außerdem müssen dynamische Webseiten noch an die Effizienz des Webservers durch ihre Eigenschaften größeren Anforderungen stehen.

Weiterhin ist es bekannt, dass die Verwendung von CGI-Schnittstellen (Common Gateway Interface) zur Generierung dynamischer Webseiten möglich ist. Dabei können Programme über CGI-Schnittstellen auf einem Webserver ausgeführt werden. Ein derartiges Programm kann in allen möglichen Programmiersprachen geschrieben sein, dabei muss es für das Betriebssystem des Webservers kompiliert werden. Die Ausführung von CGI ist relativ langsam, da für jeden CGI-Aufruf eine neue Programm-Instanz ausgeführt werden muss. Deshalb wird CGI heutzutage nicht mehr so oft eingesetzt.

US 2004/0015476 A1 offenbart ein System zur automatischen Generierung nutzerspezifischer dynamischer Webseiten. WO 01/67190 A2 offenbart ein web-basiertes Steuerungsverfahren für industrielle Produktionsanlagen.

Der Erfindung liegt die Aufgabe zugrunde, dynamische Webseiten in einer Programmiersprache eines SPS-Systems automatisiert zu erstellen.
Diese Aufgabe wird erfindungsgemäß durch ein speicherprogrammierbares Steuerungssystem mit den Merkmalen des Patentanspruchs 1 bzw. durch ein Verfahren mit den Merkmalen des Patentanspruchs 7 gelöst. Die abhängigen Ansprüche betreffen vorteilhafte Weiterbildungen und Ausgestaltungen des Steuerungssystems bzw. des Verfahrens.
Der Erfindung liegt die Idee zugrunde, dass dynamische Webseiten durch Kombination von Webanwendungen und Steuerungsprogrammierungen erstellt werden können. Eine dynamische Webseite, welche durch einen Webbrowser angefragt bzw. aufgerufen wird, wird durch ein speicherprogrammierbares Steuerungssystems (SPS-System) automatisch erstellt, wobei das SPS-System einen Server zur Administration der dynamischen Webseite, ein Anwendungsprogramm zur Bereitstellung der dynamischen Webseite und ein Betriebssystem als Schnittstelle zur Datenübertragung zwischen dem Server und dem Anwendungsprogramm umfasst. Ein Benutzer kann eine Webanwendung starten, indem er im Webbrowser beispielsweise die URL (Uniform Resource Locator) einer dynamischen Webseite eingibt und damit eine Anfrage der Webseite sendet. Der Server nimmt diese Anfrage entgegen und übergibt sie dadurch an das Betriebssystem, dass die vom Webbrowser an dem Server übermittelten Identifikationsparameter (Cookies, URL oder http-Request) der angefragten Webseite weiter ins Betriebssystem gesendet werden. Zur Ermittlung der am Betriebssystem gesendeten Identifikationsparameter wird eine erste Abfrage vom Anwendungsprogramm an das Betriebssystem gesendet, und nach dem Ergebnis dieser Ermittlung sind die Identifikationsparameter vom Betriebssystem in das Anwendungsprogramm weiterleitbar. Die erste Abfrage kann beispielsweise durch einen Betriebssystemaufruf (SFB/SFC) ermöglicht werden. Falls durch die erste Abfrage ermittelt wird, dass die Webseite durch den Webbrowser angefragt wurde, werden die Identifikationsparameter der Webseite in das Anwendungsprogramm weitergeleitet. Auf Basis der Identifikationsparameter wird diese Webseite durch das Anwendungsprogramm mittels einer Programmiersprache des Steuerungssystems bereitgestellt. Anschließend wird die bereitgestellte dynamische Webseite über das Betriebssystem an den Server übersendet, damit diese Webseite vom Server an den Webbrowser geschickt werden kann. Daraufhin wird diese angefragte Webseite dem Benutzer durch den Webbrowser dargestellt. Ein ganz großer Vorteil von derartigen erstellten dynamischen Webseiten liegt in der Möglichkeit, dass ein Benutzer seine Webanwendung in einer Programmiersprache erstellen kann, die er kennt. Er kann dann dynamische Webseiten insbesondere mit einer SPS-Programmiersprache erstellen. In diesem erfindungsgemäßen SPS-System stellt die Erstellung von dynamischen Webseiten an die Effizienz des Webservers keine größere Anforderung, weil diese Erstellung außerhalb vom Server ausgeführt wird.

In der Regel weist die dynamische Webseite mindestens einen statischen Teil und einen dynamischen Teil auf, wobei der statische Teil im Steuerungssystem speicherbar ist, anschließend ist es möglich, nur den dynamischen Teil der angefragten Webseite aktuell zu erstellen. Dadurch kann die Last des Servers und die Anforderung an der Speicherkapazität des Servers reduziert werden.

Gemäß einer vorteilhaften Ausgestaltung der Erfindung werden die Daten des dynamischen Teils durch das Steuerungssystem ermittelt. Dabei kann man die Daten, die aktuell in einem Operandenbereich des Steuerungssystems gespeichert sind, in den dynamischen Teil einbringen. Der gespeicherte statische Teil und der ermittelte dynamische Teil werden zur Bereitstellung der Webseite durch das Anwendungsprogramm kombiniert. D.h., Webanwendung und Steuerungsprogramm können gemeinsam erstellt werden, dadurch sind die Daten auch leichter konsistent zu halten. Die dynamische Webseite wird durch das Anwendungsprogramm gewöhnlich als eine HTML-Webseite bereitgestellt, sodass die erstelle Webseite an den Server direkt gesendet wird.

Gemäß einer weiteren vorteilhaften Ausgestaltung der Erfindung enthält die dynamische Webseite mindestens eine Markierung (z.B. Tags) zur Kennzeichnung einer ersetzbaren Stelle auf der dynamischen Webseite. An dieser Stelle kann beim Abrufen der HTML-Seite ein aktueller, direkt aus dem Steuerungssystem gelesener Wert eingesetzt bzw. aktualisiert werden. In der Regel werden solche dynamischen Webseiten auf eine Auszeichnungssprache (z.B. HTML) erstellt, mit URL indiziert und in einer Datenbank gespeichert. Daher kann eine Funktionsbibliothek für das Steuerungssystem angeboten werden, die die Webseitenerstellung für Benutzer weiterhin vereinfachen kann. Die Funktionsbibliothek kann nun bei einer Anfrage einer Webseite, die durch eine URL aufgerufen wurde, ohne weitere Programmierung die zu dieser URL passende Webseite herausfinden und die Markierung der Webseite durch aktuelle Prozessdaten ersetzen, so dass eine dynamische Webseite bereitgestellt werden kann.

Gemäß einer weiteren vorteilhaften Ausgestaltung der Erfindung wird die erste Abfrage vom Anwendungsprogramm an das Betriebssystem zyklisch gesendet. Dadurch wird eine zweite Abfrage zur Sendung der bereitgestellten dynamischen Webseite an das Betriebssystem vom Anwendungsprogramm an das Betriebssystem gesendet, dadurch kann eine Datenübertragung zwischen dem Betriebssystem und dem Anwendungsprogramm unmittelbar aufgebaut werden. Die zweite Abfrage kann ebenfalls durch einen Betriebssystemaufruf (SBF/SFC) ermöglicht werden. Dabei können die Identifikationsparameter der angefragten Webseite abhängig von der ersten Abfrage dem Anwendungsprogramm übermittelt werden und die bereitgestellte Webseite abhängig von der zweiten Abfrage an den Server gesendet werden.

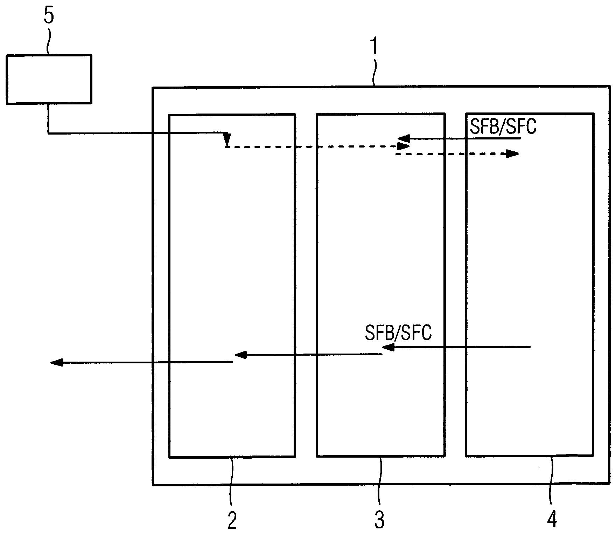

Nachfolgend wird die Erfindung anhand des in der Figur dargestellten Ausführungsbeispiels näher beschrieben und erläutert.

Die Figur zeigt ein speicherprogrammierbares Steuerungssystem zur automatisierten Erstellung einer dynamischen Webseite.

Gemäß der Figur wird ein speicherprogrammierbares Steuerungssystem 1 zur automatisierten Erstellung einer dynamischen Webseite, welche durch einen Webbrowser 5 angefragt wurde, dargestellt. Dabei fasst das Steuerungssystem 1 einen Server 2 zur Administration der dynamischen Webseite, ein Anwendungsprogramm 4 zur Bereitstellung der dynamischen Webseite und ein Betriebssystem 3, wobei das Betriebssystem 3 als Schnittstelle zur Datenübertragung zwischen dem Server 2 und dem Anwendungsprogramm 4 dient. Hierbei können Daten, wie z. B. URL-Adressen, von Benutzern durch die getätigten Eingaben (http post) oder Parameter von Links (http get) übertragen werden.

Ein Benutzer ruft mit der Eingabe einer URL-Adresse (Uniform Resource Locator) im Webbrowser 5 eine dynamische Webseite auf. Das bedeutet, dass der Webbrowser 5 an den Server eine Anfrage (http Request)sendet. Der Server 2 kann diese Anfrage verarbeiten, wobei die Kommunikation zwischen dem Webbrowser 5 und dem Server 2 durch ein textbasiertes HTTP-Protokoll geregelt wird. Das HTTP-Protokoll dient der Adressierung der angefragten Webseite über URL-Adresse, es wickelt die Interaktion zwischen dem Webbrowser 5 und dem Server 2 ab. Der Server 2 nimmt diese Anfrage entgegen und überträgt sie dadurch weiter an das Betriebssystem 3, dass die vom Webbrowser 5 an den Server 2 übermittelte URL-Adresse (Identifikationsparameter) ins Betriebssystem 3 gesendet wird. Ein Betriebssystemaufruf (SFB/SFC) wird vom Anwendungsprogramm 4 zyklisch an das Betriebssystem 3 gesendet und fragt ab, ob die Identifikationsparameter (z.B. Cookies, URL oder http-Request) an das Betriebssystem 3 gesendet worden sind. Wenn dies der Fall ist, werden die Identifikationsparameter (hier die URL-Adresse) vom Betriebssystem 3 in das Anwendungsprogramm 4 weitergeleitet.

Auf Basis dieser URL-Adresse wird die dynamische Webseite durch das Anwendungsprogramm 4 mittels einer Programmiersprache des Steuerungssystems 1 bereitgestellt. Solche Programmiersprachen können die auf das Steuerungssystem basierenden Verwendungsprogrammiersprachen wie z.B. AWL (Anweisungsliste) oder SCL (Structured Control Language) sein. Wenn die dynamische Webseite einen statischen Teil und einen dynamischen Teil aufweist, kann der statische Teil mit einer HTML-Sprache erstellt und in einer Datenbank gespeichert werden, während die Daten des dynamischen Teils aus einem Operandenbereich des Steuerungssystems 1 ermittelt werden. Der statische Teil und der dynamische Teil werden zur Bereitstellung der dynamischen Webseite durch das Anwendungsprogramm 4 kombiniert und gewöhnlich als eine HTML-Webseite bereitgestellt. Anschließend wird diese bereitgestellte dynamische Webseite vom Anwendungsprogramm 4 über das Betriebssystem 3 an den Server 2 gesendet. Schließlich wird die bereitgestellte Webseite vom Server 2 an den Webbrowser 5 gesendet (http-Response). Der Webbrowser 5 stellt die dynamische Webseite graphisch einsprechend dar.

Mittels dieses Steuerungssystem 1 kann ein Benutzer, der die Technologiekenntnisse zur Implementierung von SPS spezifiziert, aber die Inhalte und Funktionalität der Web-Anwendung nicht gleichzeitig besitzt, seine Webanwendung in einer SPS-Programmiersprache erstellen, die er kennt. In diesem Steuerungssystem 1 wird die Effizienz des Servers 2 nicht hoch angefordert, weil die Erstellung der Webseite außerhalb des Servers ausgeführt wird. Dadurch wird durch den Webbrowser 5 die Ansicht der aktuellen Werte und die Bedienung des Steuerungssystems 1 durch das Ändern der Werte möglich. Dazu kann für jedes Gerät, das durch das Steuerungssystem 1 gesteuert wird, eine eigene Webseite erstellt werden.

## Patentansprüche

1. System (1) zur automatisierten Erstellung einer dynamischen Webseite, welche durch einen Webbrowser (5) anfragbar und darstellbar ist, mit einer speicherprogrammierbaren Steuerung aufweisend:
- einen Server (2) zur Administration der dynamischen Webseite,
- ein mit einer SPS-Programmiersprache, insbesondere der AWL-Programmiersprache oder der SCL-Programmiersprache, erstelltes Anwendungsprogramm (4) zur Bereitstellung der dynamischen Webseite, und
- ein Betriebssystem (3) als Schnittstelle zur Datenübertragung zwischen dem Server (2) und dem Anwendungsprogramm (4), wobei
- Identifikationsparameter der angefragten dynamischen Webseite vom Webbrowser (5) über den Server (2) in das Betriebssystem (3) sendbar sind,
- zur Ermittlung der an dem Betriebssystem (3) gesendeten Identifikationsparameter eine erste Abfrage vom Anwendungsprogramm (4) an das Betriebssystem (3) sendbar ist,
- nach dem Ergebnis dieser Ermittlung die Identifikationsparameter vom Betriebssystem (3) in das Anwendungsprogramm (4) weiterleitbar sind,
- auf Basis der Identifikationsparameter die dynamische Webseite durch das Anwendungsprogramm (4) bereitstellbar ist und
- die bereitgestellte dynamische Webseite über das Betriebssystem (3) an dem Server (2) übersendbar ist.

2. Speicherprogrammierbares Steuerungssystem (1) nach Anspruch 1,
**dadurch gekennzeichnet, dass**
die dynamische Webseite mindestens einen statischen Teil und einen dynamischen Teil aufweist, wobei der statische Teil im Steuerungssystem (1) speicherbar ist.

3. Speicherprogrammierbares Steuerungssystem (1) nach Anspruch 1 oder 2,
**dadurch gekennzeichnet, dass**
die Daten des dynamischen Teils durch das Steuerungssystem (1) ermittelbar sind.

4. Speicherprogrammierbares Steuerungssystem (1) nach Anspruch 1,
**dadurch gekennzeichnet, dass**
die dynamische Webseite mindestens eine Markierung enthält, bei der ein dynamischer Wert des Steuerungssystems (1) ersetzbar ist.

5. Speicherprogrammierbares Steuerungssystem (1) nach einem der Ansprüche 1 bis 4,
**dadurch gekennzeichnet, dass**
die erste Abfrage vom Anwendungsprogramm (4) an das Betriebssystem (3) zyklisch sendbar ist.

6. Speicherprogrammierbares Steuerungssystem (1) nach einem der Ansprüche 1 bis 4,
**dadurch gekennzeichnet, dass**
zur Sendung der bereitgestellten dynamischen Webseite an das Betriebssystem (3) eine zweite Abfrage vom Anwendungsprogramm (4) an das Betriebssystem (3) sendbar ist.

7. Verfahren zur automatisierten Erstellung einer dynamischen Webseite, welche durch einen Webbrowser (5) angefordert und dargestellt wird für eine speicherprogrammierbare Steuerung (1), bei dem
- ein Server (2) die dynamische Webseite administriert,
- ein mit einer SPS-Programmiersprache, insbesondere der AWL-Programmiersprache oder der SCL-Programmiersprache, erstelltes Anwendungsprogramm (4) die dynamische Webseite bereitstellt, und
- ein Betriebssystem (3) als Schnittstelle Daten zwischen dem Server (2) und dem Anwendungsprogramm (4) übertragt, wobei
Identifikationsparameter der angefragten dynamischen Webseite vom Webbrowser (5) über den Server (2) in das Betriebssystem (3) gesendet werden,
- die an dem Betriebssystem (3) gesendeten Identifikationsparameter derart ermittelt werden, dass eine Abfrage an das Betriebssystem (3) gesendet wird,
- nach dem Ergebnis dieser Ermittlung die Identifikationsparameter vom Betriebssystem (3) in das Anwendungsprogramm (4) weitergeleitet werden,
- auf Basis der Identifikationsparameter die dynamische Webseite durch das Anwendungsprogramm (4) bereitgestellt wird und
- die bereitgestellte dynamische Webseite über das Betriebssystem (3) an den Server (2) übersendet wird.

8. Verfahren nach Anspruch 7,
**dadurch gekennzeichnet, dass**
die dynamischen Webseite mindestens ein statischer Teil und ein dynamischer Teil aufweist, wobei der statische Teil im Steuerungssystem (1) gespeichert wird.

9. Verfahren nach Anspruch 7 oder 8,
**dadurch gekennzeichnet, dass**
die Daten des dynamischen Teils durch das Steuerungssystem (1) ermittelt werden.

10. Verfahren nach Anspruch 7,
**dadurch gekennzeichnet, dass**
die dynamische Webseite mindestens eine Markierung enthält, bei der ein dynamischer Wert des Steuerungssystems (1) ersetzbar ist.

11. Verfahren nach einem der Ansprüche 7 bis 10,
**dadurch gekennzeichnet, dass**
die erste Abfrage vom Anwendungsprogramm (4) an das Betriebssystem (3) zyklisch gesendet wird.

12. Verfahren nach einem der Ansprüche 7 bis 11,
**dadurch gekennzeichnet, dass**
zur Sendung der bereitgestellten dynamischen Webseite an das Betriebssystem (3) eine zweite Abfrage vom Anwendungsprogramm (4) an das Betriebssystem (3) gesendet wird.

## Claims

1. System (1) for the automated creation of a dynamic web page, which can be requested and displayed by a web browser (5), with a programmable logic controller having:
- a server (2) for the administration of the dynamic web page,
- an application program (4) created with an SPS programming language, in particular the AWL programming language or the SCL programming language, for the provision of the dynamic web page, and
- an operating system (3) as an interface for the transmission of data between the server (2) and the application program (4), wherein
- identification parameters of the requested dynamic web page can be sent by the web browser (5) via the server (2) into the operating system (3),
- to determine the identification parameters sent to the operating system (3), a first request can be sent from the application program (4) to the operating system (3),
- according to the result of this determination, the identification parameters can be forwarded by the operating system (3) into the application program (4),
- based on the identification parameters, the dynamic web page can be provided by the application program (4) and
- the dynamic web page provided can be transmitted via the operating system (3) to the server (2).

2. Programmable logic controller system (1) according to claim 1,
**characterised in that**
the dynamic web page has at least one static part and one dynamic part, wherein the static part can be stored in the control system (1).

3. Programmable logic controller system (1) according to claim 1 or 2,
**characterised in that**
the data of the dynamic part can be determined by the control system (1).

4. Programmable logic controller system (1) according to claim 1,
**characterised in that**
the dynamic web page contains at least one marker, with which a dynamic value of the control system (1) can be replaced.

5. Programmable logic controller system (1) according to one of claims 1 to 4,
**characterised in that**
the first request can be sent cyclically by the application program (4) to the operating system (3).

6. Programmable logic controller system (1) according to one of claims 1 to 4,
**characterised in that**
to send the provided dynamic web page to the operating system (3), a second request can be sent by the application program (4) to the operating system (3).

7. Method for the automated creation of a dynamic web page, which is requested and displayed by a web browser (5), for a programmable logic controller system (1), wherein
- a server (2) administers the dynamic web page,
- an application program (4) created with an SPS programming language, in particular the AWL programming language or the SCL programming language provides the dynamic web page, and
- an operating system (3) as an interface transmits data between the server (2) and the application program (4), wherein
- identification parameters of the requested dynamic web page are sent by the web browser (5) via the server (2) into the operating system (3),
- the identification parameters sent to the operating system (3) are determined in such a way that a request is sent to the operating system (3),
- according to the result of this determination, the identification parameters are forwarded by the operating system (3) into the application program (4),
- based on the identification parameters, the dynamic web page is provided by the application program (4) and
- the dynamic web page provided is transmitted to the server (2) via the operating system (3).

8. Method according to claim 7,
**characterised in that**
the dynamic web page has at least one static part and one dynamic part, wherein the static part is stored in the control system (1).

9. Method according to claim 7 or 8,
**characterised in that**
the data of the dynamic part is determined by the control system (1) .

10. Method according to claim 7,
**characterised in that**
the dynamic web page contains at least one marker with which a dynamic value of the control system (1) can be replaced.

11. Method according to one of claims 7 to 10,
**characterised in that**
the first request is sent cyclically by the application program (4) to the operating system (3).

12. Method according to one of claims 7 to 11,
**characterised in that**
to send the provided dynamic web page to the operating system (3) a second request is sent by the application program (4) to the operating system (3).

## Revendications

1. Système (1) pour la génération automatique d'une page web dynamique, laquelle peut être interrogée et affichée par un navigateur web (5), avec une commande par programme enregistré présentant :
- un serveur (2) pour l'administration de la page web dynamique,
- un programme d'application (4) généré avec une langue de programmation SPS, en particulier la langue de programmation AWL ou la langue de programmation SCL pour fournir la page web dynamique, et
- un système d'exploitation (3) en tant qu'interface pour la transmission de données entre le serveur (2) et le programme d'application (4), dans lequel
- des paramètres d'identification de la page web dynamique interrogée peuvent être envoyés dans le système d'exploitation (3) par le navigateur web (5) par le biais du serveur (2),
- pour déterminer les paramètres d'identification envoyés au système d'exploitation (3), une première requête peut être envoyée au système d'exploitation (3) par le programme d'application (4),
- selon le résultat de cette détermination, les paramètres d'identification peuvent être transmis du système d'exploitation (3) dans le programme d'application (4),
- en se basant sur les paramètres d'identification, la page web dynamique peut être fournie par le programme d'application (4) et
- la page web dynamique fournie peut être envoyée au serveur (2) par le biais du système d'exploitation (3).

2. Système de commande (1) par programme enregistré selon la revendication 1, **caractérisé en ce que** la page web dynamique présente au moins une partie statique et une partie dynamique, dans lequel la partie statique peut être conservée en mémoire dans le système de commande (1).

3. Système de commande (1) par programme enregistré selon la revendication 1 ou 2, **caractérisé en ce que** les données de la partie dynamique peuvent être déterminées par le système de commande (1).

4. Système de commande (1) par programme enregistré selon la revendication 1, **caractérisé en ce que** la page web dynamique contient au moins un marquage dans lequel une valeur dynamique du système de commande (1) peut être remplacée.

5. Système de commande (1) par programme enregistré selon l'une des revendications 1 à 4, **caractérisé en ce que** la première requête peut être envoyée de manière cyclique au système d'exploitation (3) par le programme d'application (4).

6. Système de commande (1) par programme enregistré selon l'une des revendications 1 à 4, **caractérisé en ce que** pour envoyer la page web dynamique fournie au système d'exploitation (3), une deuxième requête peut être envoyée au système d'exploitation (3) par le programme d'application (4).

7. Procédé pour la génération automatique d'une page web dynamique, laquelle est demandée et affichée par un navigateur web (5) pour une commande par programme enregistré (1), dans lequel
- un serveur (2) administre la page web dynamique,
- un programme d'application (4) généré avec une langue de programmation SPS, en particulier la langue de programmation AWL ou la langue de programmation SCL fournit la page web dynamique, et
- un système d'exploitation (3) en tant qu'interface transmet des données entre le serveur (2) et le programme d'application (4), dans lequel
- des paramètres d'identification de la page web dynamique interrogée sont envoyés dans le système d'exploitation (3) par le navigateur web (5) par le biais du serveur (2),
- les paramètres d'identification envoyés au système d'exploitation (3) sont ainsi déterminés qu'une requête est envoyée au système d'exploitation (3),
- selon le résultat de cette détermination, les paramètres d'identification sont transmis du système d'exploitation (3) dans le programme d'application (4),
- en se basant sur les paramètres d'identification, la page web dynamique est fournie par le programme d'application (4) et
- la page web dynamique fournie est envoyée au serveur (2) par le biais du système d'exploitation (3).

8. Procédé selon la revendication 7, **caractérisé en ce que** la page web dynamique présente au moins une partie statique et une partie dynamique, dans lequel la partie statique est conservée en mémoire dans le système de commande (1).

9. Procédé selon la revendication 7 ou 8, **caractérisé en ce que** les données de la partie dynamique sont déterminées par le système de commande (1).

10. Procédé selon la revendication 7, **caractérisé en ce que** la page web dynamique contient au moins un marquage dans lequel une valeur dynamique du système de commande (1) peut être remplacée.

11. Procédé selon l'une des revendications 7 à 10, **caractérisé en ce que** la première requête est envoyée de manière cyclique au système d'exploitation (3) par le programme d'application (4).

12. Procédé selon l'une des revendications 7 à 11, **caractérisé en ce que** pour envoyer la page web dynamique fournie au système d'exploitation (3), une deuxième requête est envoyée au système d'exploitation (3) par le programme d'application (4).
